# EUROPEAN PATENT SPECIFICATION

(11) **EP 1 520 773 B1**
(45) Date of publication and mention of the grant of the patent: **18.03.2009**
(21) Application number: 04022573.2
(22) Date of filing: 22.09.2004
(51) Int. Cl.: B62J 6/18, B62J 6/00

(54) **Electrical component holder for bicycle**
Halter für elektrische Bauteile an Fahrrädern
Support d'équipement électrique pour un vélo

(30) Priority: 30.09.2003 JP 2003339134
(43) Date of publication of application: 06.04.2005
(73) Proprietor: SHIMANO INC., Osaka 590-8577 (JP)
(72) Inventor: Uno, Koji, Osaka (JP)
(74) Representative: Grosse - Schumacher - Knauer - von Hirschhausen

(56) References cited:
- EP-A- 1 394 031
- DE-U- 29 915 125
- GB-A- 2 126 438
- GB-A- 2 355 868
- US-A- 4 069 451
- US-A- 5 247 430

## Description

### Technical Field

The present invention relates to an electrical component holder system for a bicycle, and particularly to a bicycle electrical component holder system connected to a dynamo via a first connecting cord, for supplying the output of the dynamo to a plurality of electrical components.

### Background Art

In recent years, bicycles have come to be equipped with a number of electrical devices in order to meet various requirements by users. Examples arc lights, display devices, cell phone chargers, and the like. In such a bicycle, it is necessary to supply predetermined levels of power to each of electrical components such as a light, display device, or cell phone charger. While it is possible for each of a number of electrical components such as a light, display device, or cell phone charger to use batteries, the use of batteries entails the inconvenience of having to replace the batteries periodically, as well as larger size of the electrical component per se. Accordingly, there is a significant advantage in supply each of the electrical components with its required power from a dynamo. However, since power requirements of a plurality of electrical components will differ by electrical component, a separate dynamo for each electrical component is provided on the bicycle. For example, where a light and cell phone charger are installed on a bicycle, both a dynamo for the light and a dynamo for the cell phone charger arc installed on the bicycle.

In conventional bicycles, by providing a separate dynamo for each electrical component, each of a plurality of electrical components may be provided with a predetermined level of power. However, as the number of electrical components increases, the number of dynamos required increases as well. In actual practice, the number of electrical components that a rider can use on a bicycle is limited. Additionally, since a dynamo is designed to generate electricity through rotation of the bicycle wheel, a greater number of dynamos means a greater burden on the rider, when the rider is turning the wheels to cause the dynamos generate power. The greater the burden is on the rider when turning the wheels, the more likely it is that instability will result from insufficient power supply from dynamos to electrical components.

EP 1 394 031 A shows an electrical component holder for a bicycle according to the preamble of claim 1 of the invention. The output portion has a plurality of electrical contact terminals disposed on a mounting portion for mounting electrical components like electrical connectors. The connectors are detachably mountable on the mounting portion of the component holder. The mounting portion has a mateable portions to mate with mounting portions of the components and to electrically connect the components in a predetermined manner. This holder allows to connect a bicycle component only by a wire connector.

GB 2 126 438 A shows an electrical component holder with an output having a plurality of electrical contact terminals to connect to different bicycle components. However, the holder does not allow to directly mount and at the same time electrically connect a bicycle component.

It is an object of the present invention to deliver stable output from a dynamo to a plurality of electrical components, without installing multiple dynamos on the bicycle.

The bicycle electrical component holder system according to claim 1 of this inventtion is installed on a bicycle having a dynamo. This bicycle electrical component holder system delivers the output of the dynamo to a plurality of electrical components, and is coupled to the dynamo via a first connecting cord. The bicycle electrical component holder system comprises a housing, an input portion, a regulator circuit, and an output portion. The housing is mountable on the frame or handlebar of the bicycle. To the input portion is connected the first connecting cord. The regulator circuit is disposed inside the housing. In this regulator circuit, dynamo output input from the input portion is regulated such that the regulated dynamo output can be used by each of the plurality of electrical components. The output portion is disposed on the housing, and outputs to the plurality of electrical components the dynamo output regulated by the regulator circuit.

With this bicycle electrical component holder, output from a dynamo is input to the regulator circuit via a first connecting cord. In the regulator circuit, dynamo output input from the input portion is regulated such that the output can be used by each of the plurality of electrical components. Dynamo output having been regulated by the regulator circuit is output from the regulator circuit to an output portion, and then output to the plurality of electrical components from the output portion.

Here, once the regulator circuit has regulated dynamo output such that it can be used by each of the plurality of electrical components, the dynamo output having been regulated by the regulator circuit is output from the output portion to the plurality of electrical components, whereby the output of the dynamo may be delivered stably to the plurality of electrical components, without installing multiple dynamos on the bicycle.

A first mounting portion is formed on the housing. Any one of the plurality of electrical components is detachably mountable on this first mounting portions. In this case, by mounting any one of a plurality of electrical components on the first mounting portion, dynamo output having been regulated by the regulator circuit can be supplied to an electrical component mounted on the housing.

The output portion has a plurality of first contact terminals. The plurality of first contact terminals are disposed on the first mounting portion, or in proximity to the first mounting portion. The first mounting portion of the housing has a first convex portion. The first convex portion of the first mounting portion is mateable with a first concave portion disposed on an electrical component. By mating the first convex portion of the first mounting portion with the first concave portion of the electrical component, the electrical component may be mounted securely on the housing.
Pairs of the first contact terminals are disposed to either side of the first convex portion and arranged lined up along the length of the first convex portion. Pairs of second contact terminals are disposed on the electrical components, arranged to either side of the first concave portions and offset in the lengthwise direction of the first concave portions, respectively. Such, when the first concave portion of an individual electrical component is mated with the first convex portion of the mounting portion, the second contact terminal pair of the individual electrical component electrically connects with a predetermined pair of the first contact terminals from among the first contact terminal pairs.

The bicycle electrical component holder system of another embodiment is a bicycle electrical component holder system, wherein the plurality of electrical components include a display device capable of displaying a riding condition of the bicycle. The output of the dynamo has electrical power and an electrical signal; the regulator circuit converts the electrical signal of the dynamo input from the input portion into a display signal, and sends the display signal to the output portion on which the display device is mounted. In this case, the regulator circuit converts the electrical signal of the dynamo input from the input portion into a display signal, and sends the display signal to the output portion to which the display device is connected.

The bicycle electrical component holder system is a bicycle electrical component holdersystem, wherein the regulator circuit regulates the electrical power of the dynamo input from the input portion, and sends it to the output portion to which the display device is connected. In this case, since the regulator circuit regulates the electrical power sent to the output portion to which the display device is connected, power having been regulated by the regulator circuit can be stably supplied to the display device, once the display device is connected to the output portion. With this arrangement, once the display device is connected to the output portion, bicycle velocity, trip distance, or the like can be displayed on the display device.

The bicycle electrical component holder system of another embodiment is a bicycle electrical component holder system, wherein the plurality of electrical components include a radio, a cell phone charger, and a light. The output of the dynamo has electrical power and an electrical signal, and the regulator circuit regulates the electrical power of the dynamo input from the input portion, and sends it to the output portion to which the radio, cell phone charger, and light are connected. In this case, the regulator circuit regulates the electrical power sent to the output portion to which the radio, cell phone charger, and light are connected. By means of this arrangement, once the radio, cell phone charger, and light are connected to the output portion, power having been regulated by the regulator circuit can be stably supplied to the radio, cell phone charger, and light.

The bicycle electrical component holder system of another embodiment is a bicycle electrical component holder system, wherein the output of the dynamo has electrical power and an electrical signal. The bicycle electrical component holder further comprises a charge storage element. This charge storage element is disposed inside said housing, and stores the power of the dynamo input from the input portion. In this case, since a charge storage element accommodated within the housing stores dynamo power input from the input portion, power from the dynamo can be supplied to a plurality of electrical components, even when the rider is not driving the bicycle.

### Effects of the Invention

According to the present invention, once a regulator circuit has regulated the output of a dynamo such that the output can be used by each of a plurality of electrical components, the output having been regulated by the regulator circuit is output to the plurality of electrical components by an output portion, whereby the plurality of electrical components may be delivered stable output from the dynamo, without installing multiple dynamos on the bicycle.

### Brief Description of the Drawings

- Fig. 1: Side view of a bicycle according to one embodiment of the invention.
- Fig. 2: Perspective view of handlebar portion thereof.
- Fig. 3: Block diagram showing internal arrangement of the electrical component holder system.
- Fig. 4: Perspective view of mounting method when electrical components are mounted on the electrical component holder system.

### Embodiment 1

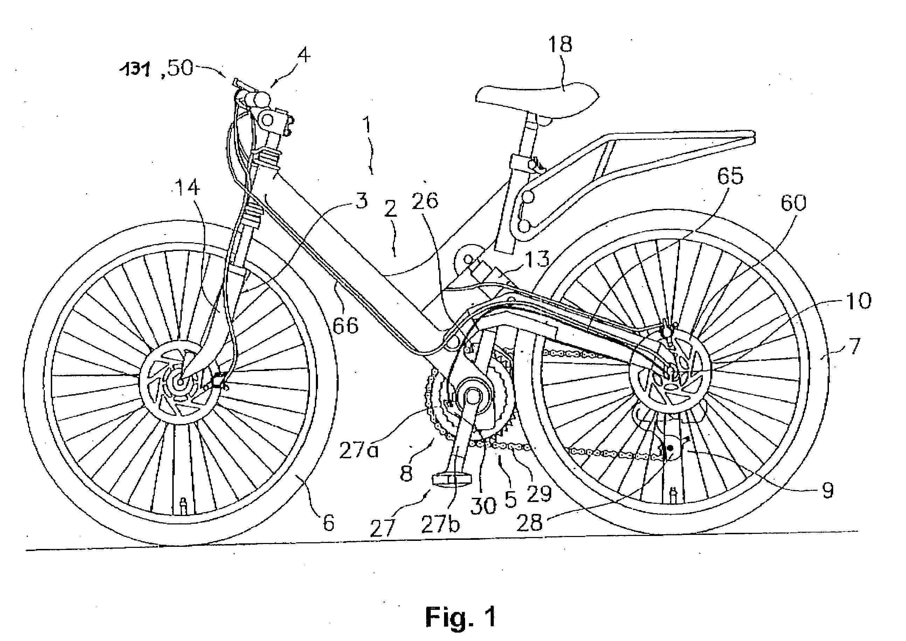

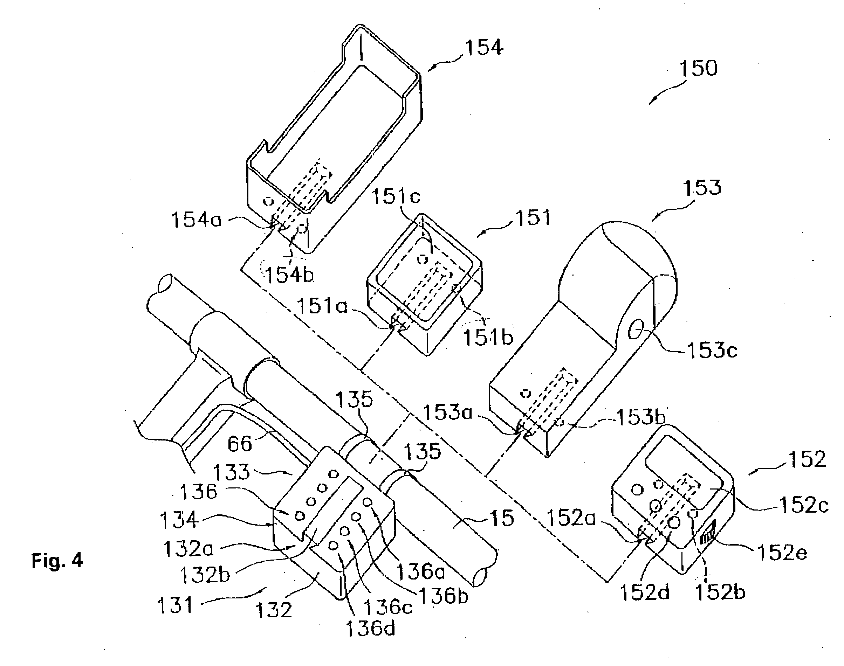

As shown in Fig. 1, the bicycle pertaining to Embodiment 1 of the invention is a mountain bike having front and rear suspensions. This bicycle comprises a frame 1 having a frame body 2 with rear suspension 13 attached and a front fork 3 with a front suspension 14 attached; a handlebar portion 4; a front wheel 6 mounted on the front fork 3; a rear wheel 7 having a hub dynamo 10 installed thereon; a drive portion 5 that includes front and rear shifters 8, 9; a controller 30 for controlling various components including the front and rear shifters 8, 9; and an electrical component holder 131 (see Fig. 4) for mounting a plurality of electrical components 150. Frame body 2 of frame is constructed of welded irregular-shaped pipe. Various components, including a saddle 18 and drive portion 5, are mounted on the frame body 2. The front fork 3 is installed on the front of frame body 2, so as to swivel about a diagonally inclined axis.

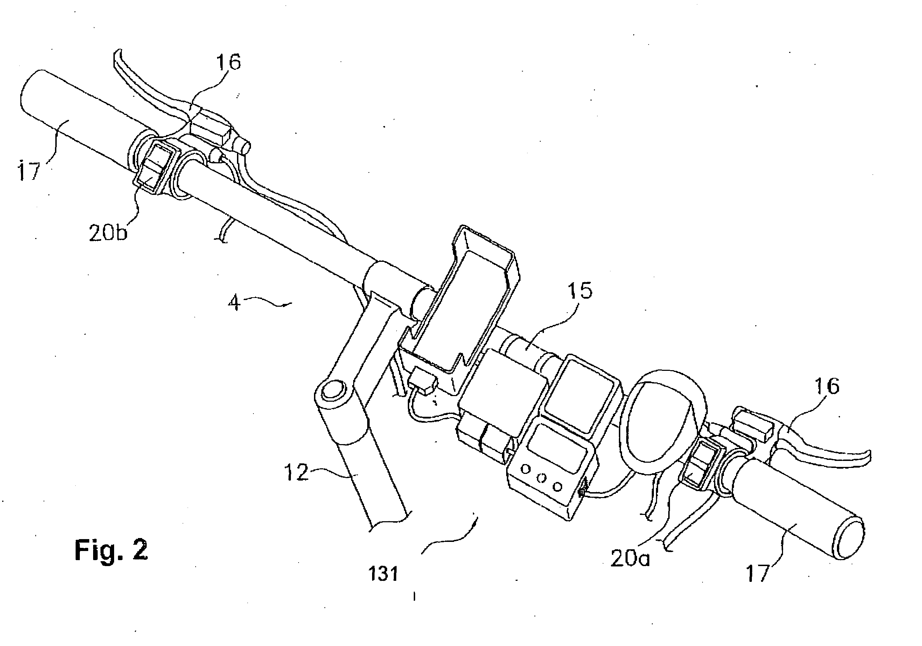

As shown in Fig. 2, handlebar portion 4 has a handlebar stem 12, affixed to the upper end of front fork 3; and a handlebar 15 affixed to handlebar stem 12. A brake lever 16 and grip 17 are installed at each end of handlebar 15. In the brake lever 16 mounting area are mounted shift switches 20b, 20a for manually shifting the front and rear shifters 8, 9. Electrical component holder 131 is installed on handlebar 15, disposed between handlebar stem 12 and shift switch 20a.

The hub dynamo 10 of rear wheel 7 is a hub permitting installation of the brake disk 60 of a disk brake and freewheel equipped with a multiple-speed gear; internally, it houses an alternating current generator (not shown) that generates electricity through turning of the rear wheel. The alternating current generator is connected via a connecting cord 65 to controller 30 and electrical component holder 131.

Drive portion 5 is disposed in the lower portion of frame body 2 (hanger portion), and comprises a front shifter 8 having a front derailleur 26; and a rear shifter 9 having a multiple-speed gear with, for example, nine sprockets, and a rear derailleur 28. Crank 27 has a gear crank 27a with, for example, three sprockets; and a left crank 27b. Drive portion 5 also has a chain 29 engageable on any of the sprockets of gear crank 27a and the multiple-speed gear. In a drive portion of this kind, when shift switch 20a or 20b is operated, a control signal from shift switch 20a or 20b is processed by controller 30. The chain 29 engaged on sprockets of gear crank 27a and the multiple-speed gear is then guided onto different sprockets on the gear crank 27a and multiple-speed gear.

Controller 30 is mounted, for example, in the hanger portion in the lower section of the frame body 2. This controller 30 is connected to the alternating current generator via a cord 65. Controller 30 is actuated by electrical power generated by the alternating current generator, and by means of the supplied current controls the front derailleur 26 and the rear derailleur 28, which is connected via a connecting cord (not shown).

Electrical component holder 131 is a component for supplying outputs, such as power or electrical signals, from alternating current generator of hub dynamo 10 to the plurality of electrical components 150. As shown in Fig. 4, this electrical component holder 131 has a housing 132, an input portion 133, and an output portion 134. A mounting member 135 is attached to housing 132. By means of this mounting member 135, housing 132 is detachably mounted on handlebar 15. A first mounting portion 132a is formed on housing 132; this first mounting portion 132a permits detachable mounting of any one of the plurality of electrical components 150. First mounting portion 132a has a first convex portion 132b. First convex portion 132b is formed with considerable length in the front-to-back direction at the upper face of housing 132, with the housing 132 installed on handlebar 15. This first convex portion 132b has a tapered shape that flares out at both side walls moving out from the housing 132, from the upper face of the housing 132. An input portion 133 is disposed on housing 132, and a first connecting cord 66 is connected to input portion 133. First connecting cord 66 is connected to input portion 133 and to the alternating current generator.

Output portion 134 has a plurality of first contact terminals 136, the plurality of first contact terminals 136 being disposed on housing 132. The plurality of first contact terminals 136 consist, for example, of eight first contact terminals 136. These eight first contact terminals 136 consist of four pairs of first contact terminals 136a, 136b, 136c, 136d, each pair composed of two first contact terminals 136. The pairs of first contact terminals 136a, 136b, 136c, 136d are disposed to either side of first convex portion 132b. The pairs of first contact terminals 136a, 136b, 136c, 136d are arranged lined up along the length of first convex portion 132b.

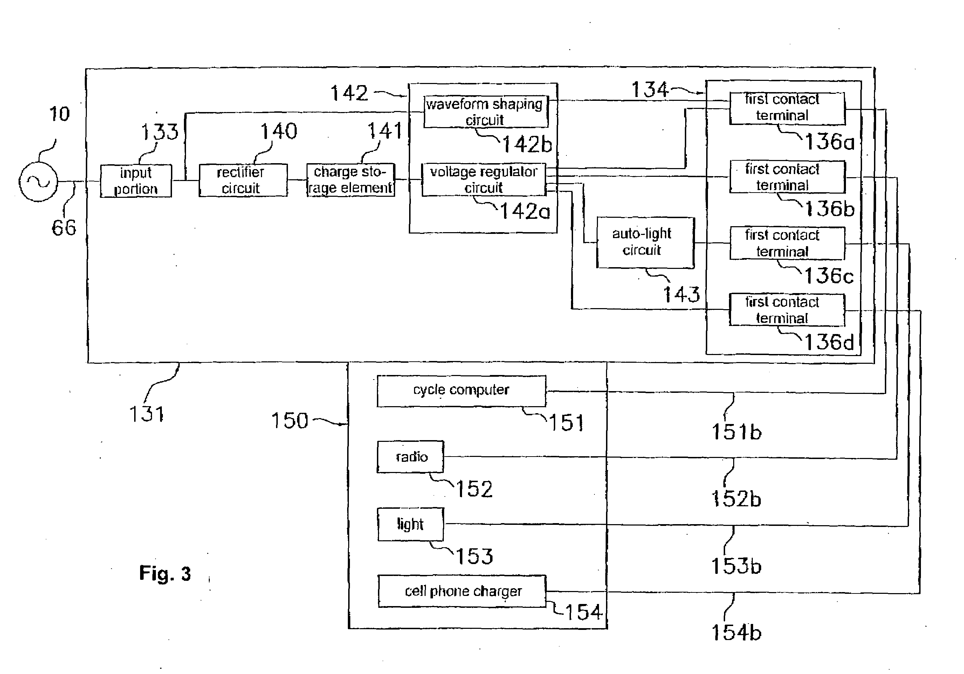

As shown in Fig. 3, a rectifier circuit 140, a charge storage element 141, a regulator circuit 142, and an auto-light circuit 143 are housed within electrical component holder 131. Rectifier circuit 140 converts AC power from the alternating current generator 119 input to input portion 133 into DC power: Rectified DC power from rectifier circuit 140 is output by rectifier circuit 140 to charge storage element 141. Charge storage element 141 consists of a large capacity capacitor, for example, and stores the DC power that has been rectified by rectifier circuit 140. Charge storage element 141 could consist of a secondary cell, such as a nickel-cadmium cell, lithium ion cell, or nickel-hydrogen cell, rather than a capacitor. DC power stored by charge storage element 141 is supplied by charge storage element 141 to the voltage regulator circuit 42a of regulator circuit 142, described later.

Regulator circuit 142 regulates power, signals and the like into predetermined power, signals and the like, so that these can be used by each of a plurality of electrical components 150 (cycle computer 151, radio 152, light 153, and cell phone charger 154) described later. Regulator circuit 142 comprises a voltage regulator circuit 142a and a waveform shaping circuit 142b. Voltage regulator circuit 142a regulates DC voltage, supplied by charge storage element 141, to predetermined voltage, and supplies this to three pairs of first contact terminals 136a, 136b, 136d and to an auto-light circuit 143. In this voltage regulator circuit 142a, DC voltage supplied by charge storage element 141 is regulated, for example, to 1.2 V, 3.0 V, 3.5 V, and 3.7 V. 1.2 V DC power is output to the one pair of first contact terminals 136a; 3.0 V DC power to one pair of first contact terminals 136b; 3.5 V DC power to auto-light circuit 143; and 3.7 V DC power to one pair of first contact terminals 136d. Waveform shaping circuit 142b converts the electrical signal (sine wave) from the alternating current generator 119 input to input portion 133 into a pulsed signal (rectangular wave). This pulsed signal is output from waveform shaping circuit 142b to first contact terminals 136a. The auto-light circuit 43 is provided for controlling power on the basis of a signal from a sensor (not shown) to automatically turn the light on and off. This auto-light circuit 143 controls DC power from voltage regulator circuit 142a and outputs it to the pair of first contact terminals 136c. Power and electrical signals regulated in this manner in voltage regulator circuit 142a and auto-light circuit 143 are supplied by the four pairs of first contact terminals 136a, 136b, 136c, 136d to the various electrical components 150.

As shown in Fig. 4, the plurality of electrical components 150 include, for example, a cycle computer 151, radio 152, light 153, and cell phone charger 154. Any one component selected from cycle computer 151, radio 152, cell phone charger 154, and light 153 can be detachably mounted on housing 152, by being installed in a first mounting portion 132a. Cycle computer 151, radio 152, light 153, and cell phone charger 154 are respectively provided with first concave portions 151a, 152a, 153a, 154a. First concave portions 151a, 152a, 153a, 154a are formed as elongated grooves whose two side walls taper inwardly going from the floor to the opening, so as to mate with a first convex portion 132b disposed on housing 132.

Pairs of second contact terminals 151b, 152b, 153b, 154b are disposed on cycle computer 151, radio 152, light 153, and cell phone charger 154, respectively. The second contact terminal pairs 151b, 152b, 153b, 154b of electrical components 151, 152, 153, 154 are arranged to either side of first concave portions 151a, 152a, 153a, 154a, in the order: cycle computer 151; radio 152; light 153; cell phone charger 154, and offset in the lengthwise direction of first concave portions 151a, 152a, 153a, 154a. With this arrangement, when the first concave portions 151a, 152a, 153a, 154a of electrical components 150 are mated with the first convex portion 132b of housing 132, the second contact terminal pairs 151b, 152b, 153b, 154b of the individual electrical components 151, 152, 153, 154 electrically connect with a predetermined pair of first contact terminals from among the first contact terminal pairs 136a, 136b, 136c, 136d (see Fig. 3). Cycle computer 151 has a liquid crystal display portion 151c capable of displaying travel information of various kinds. A control portion (not shown) comprising a microcomputer is housed in cycle computer 151. This control portion derives travel information of various kinds (e.g. travel velocity or trip distance) on the basis of a pulsed signal from the first contact terminals 136a, and displays travel information of various kinds on liquid crystal display portion 151c.

Radio 152 has a liquid crystal display portion 153c capable of displaying various bands (AM, FM etc.) and various frequencies. Radio 152 is also provided with a control button 152d for selecting various bands and various frequencies, and a volume adjustment knob 152e. Light 153 has an on/off switch 153c. Light 153 can be turned on and off by means of this on/off switch 153c. Cell phone charger 154 has a charging terminal (not shown) for charging a cell phone. Cell phone charger 154 is designed such that, when a cell phone is placed in cell phone charger 154, the charging terminal of cell phone charger 154 comes into contact with a charging terminal (not shown) disposed on the cell phone, to charge the cell phone.

The electrical component holder 131, by means of rectifying circuit 140, rectifies AC power, input to input portion 133 by alternating current generator 119 of hub dynamo 10, to give DC power. In the voltage regulator circuit 142a of regulator circuit 142, DC power supplied by charge storage element 141 is regulated to predetermined voltage, and output to four pairs of first contact terminals 136a, 136b, 136c, 136d, respectively. Electrical component holder 131, by means of waveform shaping circuit 142b of regulator circuit 142, also converts the electrical signal (sine wave) input to input portion 133 from alternating current generator 119 of hub dynamo 10 into a pulsed signal (rectangular wave). This pulsed signal is output from waveform shaping circuit 142b to a pair of first contact terminals 136a. Power and electrical signals regulated in regulator circuit 142 in this manner are output from the four pairs of first contact terminals 136a, 136b, 136c, 136d to the plurality of electrical components 150. When such an electrical component holder 131 is used, power and electrical signals from hub dynamo 10 are regulated in regulator circuit 142 into [power and signals] able to be used by individual electrical components 150; power and electrical signals regulated by regulated in regulator circuit 142 can then be supplied by the four pairs of first contact terminals 136a, 136b, 136c, 136d to the plurality of electrical components 150. By means of such an arrangement, power and electrical signals from hub dynamo 10 can be supplied consistently to a plurality of electrical components 150.

### Other Embodiments

(a) In Embodiment 1 hereinabove, there is described an example in which electrical component holder 131 comprises an electric charge storage element 141; however, it is not necessary to provide an electric charge storage element 141 to the electrical component holder 131. For example, where an electric charge storage element 141 is not provided to the electrical component holder 131, power and electrical signals from the alternating current generator of hub dynamo 10 would be output from rectifier circuit 140 to voltage regulator circuit 142a, without being stored.
(b) In Embodiment 1 and the Other Embodiments hereinabove, there is described an example in which electrical component holder 131 is mounted on the handlehar 15; however, the mounting location for electrical component holder 131 on a bicycle is not limited to that in the Embodiments hereinabove. Electrical component holder 131 could be mounted on frame body 2, for example.
(c) In Embodiment 1 and the Other Embodiments hereinabove, there is described an example in which a hub dynamo 10 is installed on rear wheel 7; however, dynamo installation location is not limited to that in the Embodiments hereinabove. The dynamo could be installed on the front wheel 6 instead.
(d) In Embodiment 1 and the Other Embodiments hereinabove, there is described an example in which a hub dynamo 10 installed in at the center of rotation of rear wheel 7; however, dynamo type is not limited to that in the Embodiments hereinabove. A rim dynamo that generates electricity through contact with the tire rim of wheel 6, 7 would be acceptable as well.
(e) In Embodiment 1 hereinabove, there is described an example in which first concave portions 151a, 152a, 153a, 154a mate with a first convex portion 132b in order to mount the electrical components 150 onto the housing 131. However, the method for mounting electrical components 150 onto the housing 131 is not limited to that in the Embodiment hereinabove.

## Claims

1. An electrical component holder system for a bicycle, the electrical component holder system comprising:
- a housing (132) mountable on a frame (2) or handlebar (15) of a bicycle;
- an input portion (133) disposed on said housing (132), with a first connecting cord (66) connected to the input portion (133) and connecting the input portion (133) with a dynamo (10) configured to input a dynamo output to the input portion (133);
- a plurality of electrical components (150);
- a regulator circuit (142) disposed inside the housing (132), and configured to regulate the dynamo output input from said input portion (133), such that a regulated dynamo output can be used by each of said plurality of electrical components (150);
- an output portion (134) disposed on said housing (132), and configured to output the regulated dynamo output to the plurality of electrical components (150);
wherein a first mounting portion (132a) is formed on said housing (132); and any one of said plurality of electrical components (150) is detachably mountable on said first mounting portion (132a); and said first mounting portion (132a) has a convex portion (132b), said convex portion (132b) being mateable with a concave portion (151a, 152a, 153a, 154a) disposed on each of said electrical components (150); and
wherein the output portion (134) has a plurality of first contact terminals (136) disposed on said first mounting portion (132a), or in proximity to said first mounting portion,
**characterized in that** pairs of the first contact terminals (136a) are disposed to either side of the first convex portion (132a) and arranged lined up along the length of the first convex portion (132b), and pairs of second contact terminals (151b) are disposed on the electrical components (150), arranged to either side of the first concave portions (151 a, 152a, 153a, 154a) and offset in the lengthwise direction of the first concave portions (151 a, 152a, 153a, 154a), respectively, such when the first concave portion (151 a, 152a, 153a, 154a) of an individual electrical component (150) is mated with the first convex portion (132b) of the mounting portion (132a) the second contact terminal pair (151b) of the individual electrical component (150) electrically connects with a predetermined pair of the first contact terminals from among the first contact terminal pairs (136a).

2. A bicycle electrical component holder system according to claim 1 wherein said plurality of electrical components (150) include a display device capable of displaying a riding condition of said bicycle;
said output of said dynamo (10) has electrical power and an electrical signal; and
said regulator circuit (142) converts said electrical signal of said dynamo input from said input portion (133) to a display signal, and sends said display signal to said output portion (134) to which said display device (151) is connected.

3. A bicycle electrical component holder system according to claim 2 wherein said regulator circuit (142) regulates said electrical power of said dynamo input from said input portion (133), and sends it to said output portion (134) to which said display device (151) is connected.

4. A bicycle electrical component holder system according to any of claims 1 to 3 wherein said plurality of electrical components (150) include a radio (152), a cell phone charger (154), and a light (153);
said output of said dynamo (10) has electrical power and an electrical signal; and
said regulator circuit (142) regulates said electrical power of said dynamo input from said input portion (133), and sends it to said output portion (134) to which said radio (152), cell phone charger (154), and light (153) are connected.

5. A bicycle electrical component holder system according to any of claims 1 to 4 wherein said output of said dynamo (10) has electrical power and an electrical signal;
further comprising a charge storage element (141) disposed inside said housing (132), for storing said power of said dynamo input from said input portion (133).

## Patentansprüche

1. Haltesystem für ein elektrisches Fahrradbauelement, wobei das Haltesystem für das elektrische Bauelement aufweist:
ein Gehäuse (132), das an einem Rahmen (2) oder einer Lenkstange (15) eines Fahrrades montiert werden kann;
einen Eingangsabschnitt (133), der am Gehäuse (132) angeordnet ist, wobei eine erste Verbindungsschnur (36) an den Eingangsabschnitt (133) angeschlossen ist und den Eingangsabschnitt (133) mit einem Dynamo (10) verbindet, der konfiguriert ist, dem Eingabeabschnitt (133) eine Dynamo-Ausgabegröße zuzuführen;
eine Mehrzahl von elektrischen Bauelementen (150);
eine Regelschaltung (142), die innerhalb des Gehäuses (132) angeordnet ist und konfiguriert ist, die vom Eingangsabschnitt (133) zugeführte Dynamo-Ausgabegröße zu regeln, derart, dass von jedem der Mehrzahl von elektrischen Bauelementen (150) eine geregelte Dynamo-Ausgabegröße genutzt werden kann;
einen Ausgangsabschnitt (134), der am Gehäuse (132) angeordnet ist und konfiguriert ist, die geregelte Dynamo-Ausgabegröße an die Mehrzahl von elektrischen Bauelementen (150) auszugeben;
wobei ein erster Befestigungsabschnitt (132a) an dem Gehäuse (132) ausgebildet ist; und ein beliebiges der Mehrzahl von elektrischen Bauelementen (150) am ersten Befestigungsabschnitt (132a) lösbar montiert werden kann; und der erste Befestigungsabschnitt (132a) einen konvexen Abschnitt (132b) aufweist, wobei der konvexe Abschnitt (132b) mit einem konkaven Abschnitt (151a, 152a, 153a, 154a) zusammengepasst werden kann, der an jedem der elektrischen Bauelemente (150) angeordnet ist; und
wobei der Ausgangsabschnitt (134) eine Mehrzahl von ersten Kontaktanschlüssen (136) aufweist, die am ersten Befestigungsabschnitt (132a) oder in der Nähe des ersten Befestigungsabschnittes angeordnet sind,
**dadurch gekennzeichnet, dass** Paare der ersten Kontaktanschlüsse (136a) zu beiden Seiten des ersten konvexen Abschnittes (132a) angeordnet sind und entlang der Länge des ersten konvexen Abschnittes (132b) aufgereiht angeordnet sind, und Paare von zweiten Kontaktanschlüssen (151b) an den elektrischen Bauelementen (150) angeordnet sind, die zu beiden Seiten der ersten konkaven Abschnitte (151a, 152a, 153a, 154a) angeordnet sind und jeweils in Längsrichtung der ersten konkaven Abschnitte (151a, 152a, 153a, 154a) versetzt sind, derart, dass, wenn der erste konkave Abschnitt (151a, 152a, 153a, 154a) eines einzelnen elektrischen Bauelementes (150) mit dem ersten konvexen Abschnitt (132a) des Befestigungsabschnittes (132a) zusammengepasst wird, das zweite Kontaktanschlusspaar (151 b) des einzelnen elektrischen Bauelementes (150) mit einem vorbestimmten Paar der ersten Kontaktanschlüsse, aus den ersten Kontaktanschlusspaaren (136a), elektrisch verbunden wird.

2. Haltesystem für ein elektrisches Fahrradbauelement nach Anspruch 1, bei dem
die Mehrzahl von elektrischen Bauelementen (150) eine Anzeigevorrichtung beinhalten, die fähig ist, einen Fahrtzustand des Fahrrades anzuzeigen;
die Ausgabegröße des Dynamos (10) elektrische Leistung und ein elektrisches Signal aufweist; und
die Regelschaltung (142) das elektrische Signal des Dynamos, das vom Eingangsabschnitt (133) zugeführt wird, in ein Anzeigesignal umwandelt, und das Anzeigesignal an den Ausgangsabschnitt (134) sendet, mit dem die Anzeigevorrichtung (151) verbunden ist.

3. Haltesystem für ein elektrisches Fahrradbauelement nach Anspruch 2, bei dem
die Regelschaltung (142) die elektrische Leistung des Dynamos regelt, die vom Eingangsabschnitt (133) zugeführt wird, und diese an den Ausgangsabschnitt (134) sendet, an den die Anzeigevorrichtung (151) angeschlossen ist.

4. Haltesystem für ein elektrisches Fahrradbauelement nach einem der Ansprüche 1 bis 3, bei dem die Mehrzahl von elektrischen Bauelementen (150) ein Radio (152), eine Zellulartelefon-Ladeeinrichtung (154) und eine Beleuchtung (153) beinhalten;
die Regelschaltung (142) die vom Eingangsabschnitt (133) zugeführte elektrische Leistung des Dynamos regelt, und diese an den Ausgangsabschnitt (134) sendet, mit dem das Radio (152), eine Zellulartelefon-Ladeeinrichtung (154) und eine Beleuchtung (153) verbunden sind.

5. Haltesystem für ein elektrisches Fahrradbauelement nach einem der Ansprüche 1 bis 4, bei dem die Ausgabegröße des Dynamos (10) elektrische Leistung und ein elektrisches Signal aufweist;
weiter aufweisend ein Ladungsspeicherelement (141), das innerhalb des Gehäuses (132) angeordnet ist, um die vom Eingangsabschnitt (133) zugeführte elektrische Leistung des Dynamos zu speichern.

## Revendications

1. Système de support d'équipement électrique pour un vélo, le système de support d'équipement électrique comprenant :
- un boîtier (132) pouvant être monté sur un cadre (2) ou guidon (15) d'un vélo ;
- une portion d'entrée (133) disposée sur ledit boîtier (132), avec un premier câble de connexion (66) connecté à la portion d'entrée (133) et connectant la portion d'entrée (133) à une dynamo (10) configurée pour appliquer une sortie de dynamo à la portion d'entrée (133) ;
- une pluralité de composants électriques (159) ;
- un circuit régulateur (142) disposé à l'intérieur du boîtier (132) et configuré pour réguler la sortie de dynamo appliquée à partir de ladite portion d'entrée (133), de manière qu'une sortie de dynamo régulée puisse être utilisée par chacun de ladite pluralité de composants électriques (150) ;
- une portion de sortie (134) disposée sur ledit boîtier (132) et configurée pour délivrer la sortie de dynamo régulée à la pluralité de composants électriques (150) ;
dans lequel une première portion de montage (132a) est formée sur ledit boîtier (132) ; et chacun de ladite pluralité de composants électriques (150) peut être monté de manière amovible sur ladite première portion de montage (132a) ; et ladite première portion de montage (132a) a une portion convexe (132b), ladite portion convexe (132b) pouvant être accouplée avec une portion concave (151a, 152a, 153a, 154a) disposée sur chacun desdits composants électriques (150) ; et
dans lequel la portion de sortie (134) comporte une pluralité de premières bornes de contact (136) disposées sur ladite première portion de montage (132a) ou à proximité de ladite première portion de montage ;
**caractérisé en ce que** des paires des premières bornes de contact (136a) sont disposées de chaque côté de la première portion convexe (132a) et agencées alignées suivant la longueur de la première portion convexe (132a) et des paires des deuxièmes bornes de contact (151b) sont disposées sur les composants électriques (150) de chaque côté de la première portion concave (151 a, 152a, 153a, 154a) et décalées dans la direction longitudinale de la première portion concave (151a, 152a, 153a, 154a), respectivement, de manière que, quand la première portion concave (151a, 152a, 153a, 154a) d'un composant électrique individuel (150) est accouplée avec première portion convexe (132b) de la première portion de montage (132a), la deuxième paire de bornes de contact (151b) du composant électrique individuel (150) se connecte électriquement avec une paire prédéterminée des premières bornes de contact parmi les paires de premières bornes de contact (136a).

2. Système de support d'équipement électrique selon la revendication 1, dans lequel ladite pluralité de composants électriques (150) comprend un dispositif d'affichage capable de visualiser une condition de marche dudit vélo ;
ladite sortie de ladite dynamo (10) a une énergie électrique et un signal électrique ; et
ledit circuit régulateur (142) convertit ledit signal électrique de ladite dynamo appliqué à partir de ladite portion d'entrée (133) en un signal d'affichage et transmet ledit signal d'affichage à ladite portion de sortie (134) à laquelle ledit dispositif d'affichage (151) est connecté.

3. Système de support d'équipement électrique selon la revendication 2, dans lequel ledit circuit régulateur (142) régule ladite énergie électrique de ladite dynamo appliquée à partir de ladite portion d'entrée (133) et la transmet à ladite portion de sortie (134) à laquelle ledit dispositif d'affichage (151) est connecté.

4. Système de support d'équipement électrique selon l'une quelconque des revendications 1 à 3, dans lequel ladite pluralité de composants électriques (150) comprend une radio (152), un chargeur de téléphone cellulaire (154) et une lampe (153) ;
ladite sortie de ladite dynamo (10) a une énergie électrique et un signal électrique ; et
ledit circuit régulateur (142) régule ladite énergie électrique de ladite dynamo appliquée à partir de ladite portion d'entrée (133) et la transmet à ladite portion de sortie (134) à laquelle ladite radio (152), ledit chargeur de téléphone cellulaire (154) et ladite lampe (153) sont connectés.

5. Système de support d'équipement électrique selon l'une quelconque des revendications 1 à 4, dans lequel ladite sortie de ladite dynamo (10) a une énergie électrique et un signal électrique ;
comprenant en outre un élément de stockage de charge (141) disposé à l'intérieur dudit boîtier (132), pour stocker ladite énergie de ladite dynamo appliquée à partir de ladite portion d'entrée (133).
